# EUROPEAN PATENT APPLICATION

(11) **EP 2 860 808 A1**
(43) Date of publication of application: **15.04.2015**
(21) Application number: 13804371.6
(22) Date of filing: 11.06.2013
(51) Int. Cl.: H01M 10/04, B23P 21/00

(54) **LAMINATION SYSTEM**

(30) Priority: 12.06.2012 JP 2012132674
(71) Applicant: Nagano Automation Co., Ltd., Ueda-shi, Nagano 386-0406 (JP)
(72) Inventor: YAMAURA, Seiji, Ueda-shi Nagano 386-0406 (JP); MIYAZAKI, Tsukasa, Ueda-shi Nagano 386-0406 (JP)
(74) Representative: Körber, Martin Hans
(86) International application number: PCT/JP2013/003671
(87) International publication number: WO 2013/187053

(57) **Abstract**

There is provided a stacking system capable of manufacturing an electrode structure, where negative electrode sheets and positive electrode sheets are stacked with separators in between, precisely and at high speed. The present invention includes a first turntable that rotationally moves a plurality of stacking regions to a plurality of work positions in order and a plurality of conveying apparatuses that stack, at stacking positions included in the plurality of work positions, target objects at the stacking regions of the first turntable that have arrived at the stacking positions. Each of the plurality of conveying apparatuses includes: a first arm that rotates between a stacking position and a first preparation unit that prepares a target object to be stacked at the stacking position, picks up the target object from the first preparation unit, and stacks the target object at the stacking position and a second arm that rotates together with the first arm between the stacking position and a second preparation unit, picks up the same target object as the first preparation unit that has been prepared at the second preparation unit, and stacks the target object at the stacking position.

## Description

### TECHNICAL FIELD

The present invention relates to a system that stacks positive electrode sheets, negative electrode sheets, separators, and the like.

### BACKGROUND ART

Japanese Laid-Open Patent Publication No. 2010-201593 discloses a workpiece conveying method that prevents the efficiency of work at a work station provided in the periphery of a turntable from falling, even when timing is synchronized with following processes. The workpiece conveying apparatus in this document includes a turntable that sends workpieces to a plurality of work stations disposed in the periphery of the turntable, a loading means that loads workpieces onto the turntable, an unloading means that unloads the workpieces from the turntable, and a control means that controls the loading means to intermittently load workpieces at a workpiece loading intended positions that are disposed in the circumferential direction on the turntable and controls the unloading means to unload in the order of the loaded workpieces.

### DISCLOSURE OF THE INVENTION

The electrode structure used in a lithium cell or the like is manufactured by stacking (laminating) a plurality of positive electrode sheets (positive electrode plates) and negative electrode sheets (negative electrode plates) with separators in between. There is demand for an apparatus capable of stacking (laminating) separators, positive electrode sheets, and negative electrode sheets precisely and at high speed.

One aspect of the present invention is a stacking system including: a first turntable that is equipped with a plurality of stacking regions and rotationally moves the plurality of stacking regions to a plurality of work positions in order; and a plurality of conveying apparatuses that stake (laminate), at stacking positions included in the plurality of work positions, target objects at the stacking regions of the first turntable that have arrived at the stacking positions. Each conveying apparatus out of the plurality of conveying apparatuses includes: a first arm that rotates between a stacking position and a first preparation unit that prepares a target object to be stacked at the stacking position, picks up the target object from the first preparation unit, and stacks the target object at the stacking position; and a second arm that rotates together with the first arm between the stacking position and a second preparation unit, picks up the same target object as the first preparation unit that has been prepared at the second preparation unit, and stacks the same target object at the first position.

That is, the present stacking system (laminating system) rotationally moves the first turntable equipped with the plurality of stacking regions intermittently and moves the stacking regions synchronously so that the plurality of stacking regions reach the plurality of work positions in order. At each stacking position, the conveying apparatuses respectively stack each target object on each stacking region of the first turntable that has arrived at each stacking position. A stacking apparatus includes a first arm that rotates between a first stacking position and a first preparation unit that prepares a first target object to be stacked at the first stacking position, picks up the first target object from the first preparation unit, and stacks the first target object at the first stacking position and a second arm that rotates together with the first arm between the first stacking position and a second preparation unit, picks up a first target object that has been prepared at the second preparation unit, and stacks the first target object at the first position.

With this stacking system, when assembling an object, for example, an electrode structure, that is laminated at the respective stacking regions, the respective conveying units are capable of picking up one of an electrode sheet (a negative electrode sheet or a positive electrode sheet) and a separator alternately from the first and second preparation units and conveying to the stacking regions. Accordingly, it is possible to hide (steal) the time (takt time) taken to prepare the target objects at the first and second preparation units in the time actually taken to laminate the target objects at the stacking regions. That is, it is possible to provide double the takt time as the processing time required for preparation of the target objects. In other words, it is possible to stack the target objects at the stacking regions in half of the processing time required for preparation of the target objects. This means that it is possible to increase the stacking speed and to reduce the time necessary for stacking. As one example, it is possible to provide the time necessary for cutting and/or arranging the postures (i.e., adjusting alignment) of the target objects to be stacked at the first preparation unit and the second preparation unit. This means that it is possible to manufacture a product (layered stack) with high precision and quality in a short time.

One example of a stacking system is an apparatus that manufactures an electrode assembly as a product. The plurality of driving apparatuses (rotating units) of such a stacking system include a first type of conveying apparatus, which stacks (laminates) an electrode sheet, which is one of a positive electrode and a negative electrode, and a second type of conveying apparatus that stacks (laminates) a separator. The first type of conveying apparatus includes a third arm that rotates together with the first arm between a supplying unit for the electrode sheet and the first preparation unit and a fourth arm that rotates together with the third arm between the second preparation unit and the supplying unit. It is desirable for the first preparation unit and the second preparation unit to respectively include an alignment unit for the electrode sheets. At the first and second preparation units, it is possible to carrying out adjustment of alignment of the electrode sheets without sacrificing the takt time required for stacking.

It is possible for the second type of conveying apparatus that stacks a separator to be equipped with cutting units that cuts separators into a predetermined size at the first preparation unit and the second preparation unit where the target objects, that is, separators are picked up, and to provide the time required to prepare sheet-like separators by cutting from a roll.

The first turntable may include four stacking positions and one unloading position. Although the four stacking positions do not need to be in the given order, it is possible to stack a positive electrode sheet, a separator, a negative electrode sheet, and a separator in order as the target objects. That is, a first type of conveying apparatus for stacking a positive electrode sheet, a second type of conveying apparatus for stacking a separator, a first type of conveying apparatus for stacking a negative electrode sheet, and a second type of conveying apparatus for stacking a separator are disposed in order along the first turntable and it is possible to stack a positive electrode sheet, a separator, a negative electrode sheet, and a separator in order at the stacking regions that have arrived at the four stacking positions. A product (layered stack, electrode assembly) in which a predetermined number of positive electrode sheets, separators, and negative electrode sheets are laminated is unloaded from the unloading position.

Another aspect of the present invention is a method including stacking a plurality of electrode sheets with separators in between using a stacking system. The method may be a method of manufacturing an electrode structure and may be a method of manufacturing a cell including an electrode structure. The stacking system includes: a first turntable that is equipped with a plurality of stacking regions and rotationally moves the plurality of stacking regions in order to a plurality of work positions; and a plurality of conveying apparatuses that stack, at stacking positions included in the plurality of work positions, target objects at the stacking regions of the first turntable that have arrived at the stacking positions. Each conveying apparatus out of the plurality of conveying apparatuses includes: a first arm that rotates between a stacking position and a first preparation unit that prepares a target object to be stacked at the stacking position, picks up the target object from the first preparation unit, and stacks the target object at the stacking position; and a second arm that rotates together with the first arm between the stacking position and a second preparation unit, picks up the same target object as the first preparation unit that has been prepared at the second preparation unit, and stacks the target object at the first position. In addition, the plurality of conveying apparatuses include a first type of conveying apparatus that stacks an electrode sheet, which is one of a positive electrode and a negative electrode, and a second type of conveying apparatus that stacks a separator.

The stacking mentioned above includes the following steps.
1. Rotating the first turntable to move to five work positions in order, the five positions including four stacking positions, where the first type of conveying apparatus and the second type of conveying apparatus are alternately disposed, and one unloading position.
2. Each of the first type of conveying apparatuses and the second type of conveying apparatuses that are alternately disposed stacking (placing) electrode sheets and separators, which have been picked up from different preparation units in each cycle out of the first preparation unit and the second preparation unit, simultaneously on the stacking regions that have arrived at the respective stacking positions.

The present invention also includes a conveying apparatus that conveys a first target object to a first work position. The conveying apparatus includes: a first arm that rotates between a first preparation unit that prepares the first target object and the first work position; a second arm that rotates together with the first arm between the first work position and a second preparation unit; a third arm that rotates together with the first arm between a supplying unit of the first target object and the first preparation unit; a fourth arm that rotates together with the third arm between the second preparation unit and the supplying unit; a driving unit that drives the first arm, the second arm, the third arm, and the fourth arm alternately in a first direction and a second direction; a function that conveys, during rotation in the first direction, a first target object from the first preparation unit to the first work position using the first arm, at the same time conveys a first target object from the supplying unit to the first preparation unit using the third arm, and carries out preprocessing at the second preparation unit; and a function that conveys, during rotation in the second direction, a first target object from the second preparation unit to the first work position using the second arm, at the same time conveys a first target object from the supplying unit to the second preparation unit using the fourth arm, and carries out preprocessing at the first preparation unit. The cycles required by preprocessing at the first and second preparation units can be hidden by the cycles in which the target objects are conveyed from the supplying unit to the work position, so that it is possible to supply preprocessed target objects in cycle units to the supply unit.

Yet another aspect of the present invention is a control method for a conveying apparatus. Such control method includes the following steps.

Moving the first arm, the second arm, the third arm, and the fourth arm in a first direction to convey a target object from the first preparation unit to the first work position using the first arm and at the same time to convey a target object from the supplying unit to the first preparation unit using the third arm, and also carrying out preprocessing at the second preparation unit.

Moving the first arm, the second arm, the third arm, and the fourth arm in a second direction to convey a target object from the second preparation unit to the first work position using the second arm and at the same time to convey a target object from the supplying unit to the second preparation unit using the fourth arm, and also carrying out preprocessing at the first preparation unit.

### BRIEF DESCRIPTION OF THE DRAWINGS

[FIG. 1] FIG. 1 is a diagram showing the overall layout of a stacking apparatus.
[FIG. 2] FIG. 2 is a diagram showing an enlargement of the configuration in the periphery of a turntable of the stacking apparatus.
[FIG. 3] FIG. 3 is a flowchart showing the operation of a first conveying apparatus.

### DETAIL DESCRIPTION

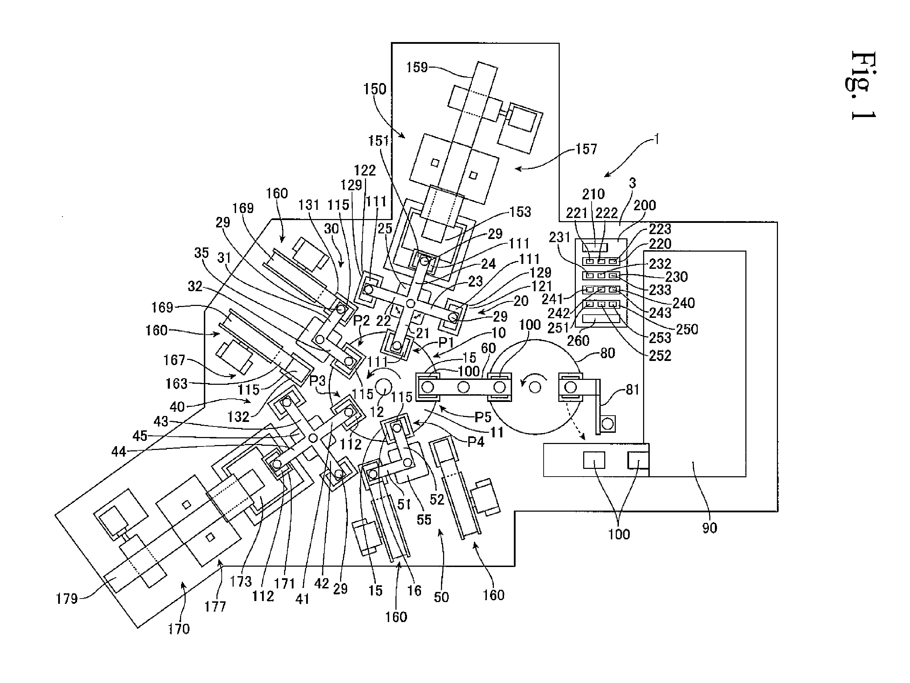

FIG. 1 shows a stacking apparatus (stacking system, laminating system) that manufactures an electrode structure (cell) by stacking (laminating) positive electrode sheets, negative electrode sheets, and separators. The stacking apparatus 1 includes a rotating stage 10 including a turntable (first turntable) 11, which rotationally moves five cell stacking jig units (cell stacking units, stacking regions) 15 in the counter-clockwise direction in the present embodiment in order to five work positions P1, P2, P3, P4, and P5 at a 72° pitch, and five conveying apparatuses (conveying units, rotating units) 20, 30, 40, 50, and 60, which are disposed so as to partially overlap the turntable 11.

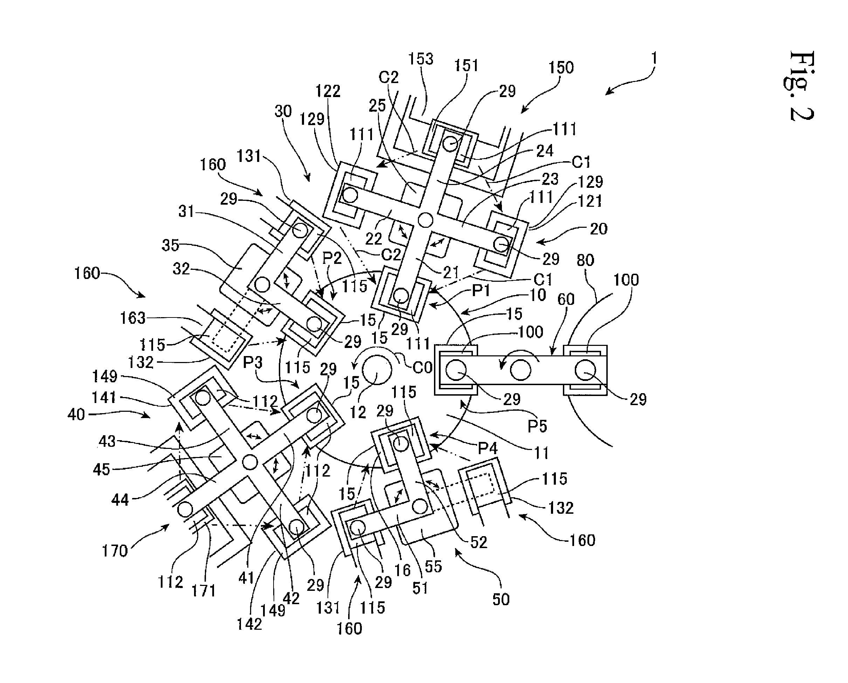

FIG. 2 shows an enlargement of the configuration about the turntable 11. The conveying apparatus 60 is a unit (unloading unit) that unloads a cell 100 that has been laminated on the turntable 11 from the work position P5 that is the unloading position to a conveying table 80. The conveying table 80 rotates with a pitch of 180° to convey the cell 100 via a conveying arm 81 to a finishing unit 90. At the finishing unit 90, fixing is performed by wrapping the outer circumference of the cell 100, in which the positive electrode sheets, the negative electrode sheets, and the separators have been laminated, with a separator or by sticking with tape, and by doing so, the cell 100 is placed in a state where it is possible to transport the cell on a conveyor line or in a box used for conveying to an external appliance for assembling a cell or the like.

The stacking system 1 further includes a chassis 3 on which the rotating stage 10, the conveying apparatuses 20 to 60, the conveying table 80, the finishing unit 90, and the like are mounted, and a control unit 200 that controls the rotating stage 10, the conveying apparatuses 20 to 60, the conveying table 80, the finishing unit 90, and the like. The control unit 200 includes hardware resources as a computer, such as memory and a CPU, and realizes predetermined functions by loading a program (program product) recorded on a recording medium such as a memory.

The rotating stage 10 includes an actuator 12 that drives the turntable 11 in the counter-clockwise direction with a pitch of 72°. The five cell stacking units 15 mounted on the turntable 11 respectively include a stacking table 16 that forms a region (stacking region) where positive electrode sheets 111 and negative electrode sheets 112 are successively stacked and laminated with separators 115 in between and a clamp (stopper, not shown) that temporarily holds the stacked sheets.

The first conveying apparatus 20 is a unit that stackes (laminates) a positive electrode sheet 111 onto a cell 100 held by the cell stacking unit 15 that has arrived at the first work position P1 out of the cell stacking units 15 of the turntable 11. One example of the positive electrode sheets 111 is positive electrode sheets produced by applying a positive electrode active material, including a positive electrode active substance, such as metal oxide, and a conductive material such as carbon black, to both surfaces of metal foil, such as aluminum foil, as a positive electrode collector, drying, rolling, and then cutting to an appropriate size. A lithium composite oxide, such as lithium nickel oxide, can be given as an example of the positive electrode active substance. The positive electrode sheets 111 may be other type of sheets than the sheets for use in a lithium cell.

The first conveying apparatus 20 includes four arms that are combined in a cross at 90°, that is, a first arm 21, a second arm 22, a third arm 23, and a fourth arm 24, and a driving unit 25 that rotates such arms 21 to 24 in synchronization in the clockwise direction and the counter-clockwise direction (in forward and reverse) by 90°. Vacuum chucking units (suction units) 29 are provided at the front ends of such arms 21 to 24 so that it is possible to suck(vacuum chuck) and convey the positive electrode sheets 111.

Out of such arms 21 to 24, by driving the first arm 21 and the second arm 22 in forward and reverse, the front ends where the vacuum chucking units 29 are provided are alternately rotated so as to overlap the cell stacking unit (stacking region) 15 that has arrived at a first work position P1 that is the position (stacking position) where a positive electrode sheet 111 is stacked. A first preparation unit 121 and a second preparation unit 122 are disposed at positions rotated by 90° from the first work position P1, and the first and second arms 21 and 22 alternately move reciprocally between the first preparation unit 121 and the first work position P1 and between the second preparation unit 122 and the first work position P1 respectively. The first and second arms 21 and 22 convey a positive electrode sheet 111 from the preparation units 121 and 122 respectively to the first work position P1 so as to place the positive electrode sheet 111 over the cell stacking unit 15 that has arrived at the first work position P1.

A supplying table (supplying unit) 151 for the positive electrode sheets 111 is disposed at a position that is 180° opposite the first work position P1. The third arm 23 and the fourth arm 24 of the first conveying apparatus 20 alternately move reciprocally (rotate) between the first preparation unit 121 and the second preparation unit 122 respectively. Accordingly, the third arm 23 and the fourth arm 24 convey positive electrode sheets 111 from the supplying table 151 alternately to the first and second preparation units 121 respectively.

The stacking system 1 includes a positive electrode delivery system 150 that delivers the positive electrode sheets 111 to the supplying table 151. The positive electrode delivery system 150 includes a cutting unit 153 that cuts the positive electrode sheets 111 of a predetermined size from a roll-type positive electrode sheet 159 and a positive plate feeder 157 that supplies the roll-type positive electrode sheet 159 to the cutting unit 153. One example of the cutting unit 153 is a unit including a double grip feeder that conveys a continuous positive electrode sheet 159 and a swing shear cutter that cuts the continuous positive electrode sheet 159 into the positive electrode sheets 111 of a predetermined size. The positive electrode sheets 111 that have been cut into the predetermined size by the cutting unit 153 are discharged to the supplying table 151. Note that the positive electrode delivery system 150 may be a system that discharges positive electrode sheets 111 that have been cut in advance to the predetermined size from a conveying cartridge to the supplying table 151.

The first and second preparation units 121 and 122 are alignment units that carry out detailed control over the orientations (angles) and positions of the positive electrode sheets 111 conveyed by the third arm 23 and the fourth arm 24 respectively. The first and second arms 21 and 22 pick up the positive electrode sheets 111 whose positions and orientations have been aligned by the first and second preparation units 121 and 122 respectively, and convey the positive electrode sheets 111 to the cell stacking units 15, thereby stacking the positive electrode sheets 111 with predetermined orientations (angles) at predetermined positions of the cell stacking units 15.

To control the postures of the positive electrode sheets 111, the first and second preparation units 121 and 122 respectively include a camera module (not shown) that detects the XYZ directions and rotational angle θ of the positive electrode sheets 111 that have been conveyed to the preparation units and an XYZθ table 129 that adjusts the posture (i.e., performs alignment) by moving the positive electrode sheets 111 in the XYZ directions and the θ direction. The respective first and second preparation units 121 and 122 may be a type that performs alignment by guiding edges in one direction or two directions of the positive electrode sheets 111. It is possible to control the position and orientation of a positive electrode sheet 111 by blowing out air from below to float the positive electrode sheet 111 along an inclined surface and guiding the edge of the sheet 111 with a physical guide provided at the front of the inclined surface.

In either method, a predetermined amount of time is consumed at the first and second preparation units 121 and 122 to control (align) the postures of the positive electrode sheets 111. As one example, at the first preparation unit 121, a task is repeated where a positive electrode sheet 111 that has been conveyed by the third arm 23 is received and at the end of the next cycle (a period where the first conveying apparatus 20 rotates in forward or reverse by 90°), the first arm 21 picks up the positive electrode sheet 111. Accordingly, at the first preparation unit 121, by aligning a received positive electrode sheet 111 between reception of such positive electrode sheet 111 conveyed by the third arm 23 (one cycle) and picking up of such positive electrode sheet 111 by the first arm 21 (the next cycle), it is possible for the first arm 21 to pick up a positive electrode sheet 111 after alignment.

With the conveying apparatus 20, by passing over a positive electrode sheet 111 from the third arm 23 to the first arm 21 at the first preparation unit 121, it is possible to provide enough time for aligning the positive electrode sheet 111 at the first preparation unit 121. However, from the discharging of a positive electrode sheet 111 to the supplying table 151 until such positive electrode sheet 111 reaches the first work position P1, two cycles are required for conveying by the third arm 23 and the first arm 21.

In the first conveying apparatus 20, at different timing the fourth arm 24 conveys a positive electrode sheet 111 to the second preparation unit 122 and the second arm 22 conveys an aligned positive electrode sheet 111 from the second preparation unit 122 to the first work position P1. Accordingly, at the first work position P1 that is passed by the cell stacking units 15 for laminating the positive electrode sheets 111, aligned positive electrode sheets 111 can be supplied and stacked on the cell stacking units 15 in single cycle units. That is, in the first conveying apparatus 20, it is possible to hide (steal) the cycles used for aligning the positive electrode sheets 111 at the first and second preparation units 121 and 122. This means that it is possible to supply the positive electrode sheets 111 in cycle units and with no cycle delay to the cell stacking units 15. Accordingly, it is possible to supply aligned positive electrode sheets 111 without affecting the takt time at the cell stacking units 15 and to manufacture a highly precise cell 100 in a short time.

In the stacking apparatus 1, the turntable 11 is rotationally moved from the fifth work position P5 to the first work position P1 in synchronization with a cycle in which the first conveying apparatus 20 moves forward and in reverse by 90°. Accordingly, it is possible to place an aligned positive electrode sheet 111 on each cell stacking unit 15.

The second conveying apparatus 30 is a unit that stacks (laminates) a separator 115 on the cell 100 held by the cell stacking unit 15 that has arrived at the second work position P2 out of the cell stacking units 15 of the turntable 11. The separators 115 prevent short circuits between the positive electrode sheets (positive electrode plates, positive electrode layers) 111 and the negative electrode sheets (negative electrode plates, negative electrode layers) 112 described above and may have a function for holding an electrolyte. One example of the separators 115 is a microporous film composed of polyolefin such as polyethylene (PE) and polypropylene (PP), and is not limited to only a single film and may be a multilayer film. The separators 115 may be structures that are not made of resin.

The second conveying apparatus 30 includes two arms, that is, a first arm 31 and a second arm 32, which are combined with a pitch of 90° in an L shape and a driving unit 35 that rotates the arms 31 and 32 in synchronization in the clockwise direction and the counter-clockwise direction (i.e., in forward and reverse) by 90°. Vacuum chucking units (suction units) 29 are provided at the front ends of such arms 31 and 32 so that it is possible to vacuum chuck and convey the separators 115.

When the first arm 31 and the second arm 32 rotate in forward and reverse, the front ends thereof where the vacuum chucking units 29 are provided rotate so as to alternately overlap the cell stacking unit (stacking region) 15 that has arrived at the second work position P2 that is the position (stacking position) where the separators 115 are stacked. Also, a first preparation unit 131 and a second preparation unit 132 of the second conveying apparatus 30 are disposed at positions that are rotated by 90° from the second work position P2. The first and second arms 31 and 32 alternately move reciprocally between the first preparation unit 131 and the second work position P2 and between the second preparation unit 132 and the second work position P2. The first and second arms 31 and 32 convey a separator 115 from the preparation units 131 and 132 respectively to the second work position P2 to place the separator 115 over the cell stacking unit 15 that has arrived at the second work position P2.

The preparation units 131 and 132 of the second conveying apparatus 30 are both supplying tables (separator supplying tables) for the separators 115. The stacking system 1 includes two separator delivery systems 160 that supply separators 115 respectively to the separator supplying tables 131 and 132 of the second conveying apparatus 30. The respective separator delivery systems 160 include a cutting unit 163 that cuts the separators 115 of a predetermined size from a roll-type separator 169 and a feeder 167 that supplies the roll-type separator 169 to the cutting unit 163. One example of the cutting unit 163 is a device including a cutter in the form of a drum in the shape of a rectangular solid, and it is possible to cut the roll-type separator 169 into a predetermined size while vacuum chucking on the respective surfaces of the drum and to supply the sheet-like separators 115 to the respective separator supplying tables 131 and 132. Note that the separator delivery systems 160 may be systems that discharge separators 115 that have been cut in advance into a predetermined size from conveying cartridges to the supplying tables 131 and 132.

In the second conveying apparatus 30, when the arms 31 and 32 rotate in forward and reverse, a separator 115 is supplied to the cell stacking unit 15 that has arrived at the second work position P2 at such timing (one cycle). The arms 31 and 32 pick up separators 115 in units of two cycles respectively from the respective supplying tables 131 and 132. This means that the respective separator delivery systems 160 can use two cycles to discharge the separators 115 to the supplying tables 131 and 132. Accordingly, at the cutting unit 163, it is possible to use two cycles to pull out and cut the roll-type separator 169 into a predetermined size. Since the roll-type separator 169 is thin and is a material that is not very easy to handle, by consuming two cycles at the cutting unit 163, it is possible to reliably supply separators 115 that have been cut to a highly precise size to the respective supplying tables 131 and 132.

The third conveying apparatus 40 is a unit that stacks (laminates) a negative electrode sheet 112 on the cell 100 held at the cell stacking unit 15 that has arrived at the work position P3 out of the cell stacking units 15 of the turntable 11. One example of the negative electrode sheets 112 is a negative electrode sheet produced by applying a negative electrode active material, such as amorphous carbon, to both surfaces of metal foil, such as nickel foil or copper foil, as a negative electrode collector, drying, rolling, and then cutting to an appropriate size.

The third conveying apparatus 40 includes four arms that are combined in a cross at 90°, that is, a first arm 41, a second arm 42, a third arm 43, and a fourth arm 44, and a driving unit 45 that rotates such arms 41 to 44 in synchronization in the clockwise direction and the counter-clockwise direction (i.e., in forward and reverse) by 90°. Vacuum chucking units (suction units) 29 are provided at the front ends of such arms 41 to 44 so that it is possible to vacuum chuck and convey the negative electrode sheets 112.

The detailed configuration of the third conveying apparatus 40 is the same as the configuration of the first conveying apparatus 20. That is, out of the arms 41 to 44, by driving the first arm 41 and the second arm 42 in forward and reverse, the front ends where the vacuum chucking units 29 are provided are alternately rotated so as to overlap the cell stacking unit (stacking region) 15 that has arrived at the third work position P3 that is the position (stacking position) where the negative electrode sheets 112 are stacked. A first preparation unit 141 and a second preparation unit 142 are disposed at positions rotated by 90° from the third work position P3, and the first and second arms 41 and 42 alternately move reciprocally between the first preparation unit 141 and the third work position P3 and between the second preparation unit 142 and the third work position P3. Accordingly, the first and second arms 41 and 42 convey a negative electrode sheet 112 from the respective preparation units 141 and 142 to the third work position P3 so as to place the negative electrode sheet 112 over the cell stacking unit 15 that has arrived at the third work position P3.

A supplying table (supplying unit) 171 for the negative electrode sheets 112 is disposed at a position that is 180° opposite the third work position P3. The third arm 23 and the fourth arm 24 of the third conveying apparatus 40 alternately move reciprocally (rotate) between the first preparation unit 141 and the second preparation unit 142 respectively. Accordingly, the third arm 43 and the fourth arm 44 conveys negative electrode sheets 112 from the supplying table 171 alternately to the first and second preparation units 141 and 142.

The stacking system 1 includes a negative electrode delivery system 170 that delivers the negative electrode sheets 112 to the supplying table 171. The detailed configuration of the negative electrode delivery system 170 is the same as the positive electrode delivery system 150 and includes a cutting unit 173 that cuts the negative electrode sheets 112 of a predetermined size from a roll-type negative electrode sheet 179 and an electrode plate feeder 177 that supplies the roll-type positive electrode sheet 179 to the cutting unit 173. The cutting unit 173 can be configured in the same way as the cutting unit 153 used for the positive electrode sheets. Note that the negative electrode delivery system 170 may be a system that discharges negative electrode sheets 112 that have been cut in advance to the predetermined size from a conveying cartridge to the supplying table 171.

The first and second preparation units 141 and 142 for the negative electrode sheets 112 are alignment units that carry out detailed control of the orientations (angles) and positions of the negative electrode sheets 112 conveyed by the third arm 43 and the fourth arm 44. The first and second arms 41 and 42 pick up the negative electrode sheets 112 whose positions and orientations have been arranged by the first and second preparation units 141 and 142, and convey the negative electrode sheets 112 to the cell stacking units 15, thereby stacking the negative electrode sheets 112 with predetermined orientations (angles) at predetermined positions of the cell stacking units 15.

The configurations of the first and second preparation units 141 and 142 of the negative electrode sheets 112 are the same as the configurations of the first and second preparation units 121 and 122 of the positive electrode sheet 111. That is, to control the postures of the negative electrode sheets 112, the first and second preparation units 141 and 142 respectively include a camera module (not shown) that detects the XYZ directions and rotational angle θ of the negative electrode sheets 112 that have been conveyed to the preparation units and an XYZθ table 149 that adjusts the posture (i.e., performs alignment) by moving the negative electrode sheets 112 in the XYZ directions and the θ direction. The preparation units 141 and 142 may be a type that performs alignment by guiding edges in one direction or two directions of the negative electrode sheets 112.

In the third conveying apparatus 40 also, a negative electrode sheet 112 is conveyed by the third arm 43 to the first preparation unit 141 and at the next timing (i.e., in the next cycle) a negative electrode sheet 112 is conveyed by the fourth arm 44 to the second preparation unit 142. The first arm 41 conveys a negative electrode sheet 112 from the first preparation unit 141 to the cell stacking unit 15 at the third work position P3 and in the next cycle, the second arm 42 conveys a negative electrode sheet 112 from the second preparation unit 142 to the cell stacking unit 15. Accordingly, a negative electrode sheet 112 that has been aligned is supplied to the cell stacking unit 15 that has arrived at the third work position P3 in one cycle and can be laminated at the cell stacking unit 15. In the same way as the first conveying apparatus 20, in the third conveying apparatus 40, it is possible to hide the cycle for aligning a negative electrode sheet 112 at the first and second preparation units 141 and 142. This means that it is possible to supply the negative electrode sheets 112 in cycle units and with no cycle delay to the cell stacking units 15.

Accordingly, it is possible to supply aligned negative electrode sheets 112 without affecting the takt time at the cell stacking units 15, and, by rotationally moving the turntable 11 to the work position P3 in synchronization with a cycle in which the third conveying apparatus 40 rotates in forward and reverse by 90°, it is possible to place an aligned negative electrode sheet 112 on each cell stacking unit 15 that has arrived. This means that it is possible to manufacture a highly precise cell 100 in a short time. In addition, the positive electrode sheet 111 is laminated at the first work position P1 using the conveying apparatus 20 and a negative electrode sheet 112 is laminated at a different work position P3 using a different conveying apparatus 40 to the positive electrode sheets 111. Accordingly, it is possible to prevent from the outset a situation where the material constructing the positive electrode sheet 111 and the material constructing the negative electrode sheet 112 adhere to one another and cause a short circuit.

The fourth conveying apparatus 50 is a unit that laminates a separator 115 on the cell 100 held by the cell stacking unit 15 that has arrived at the fourth work position P4 out of the cell stacking units 15 of the turntable 11. The configuration of the fourth conveying apparatus 50 is the same as the configuration of the second conveying apparatus 30 and includes two arms, that is, a first arm 51 and a second arm 52, which are combined with a pitch of 90° in an L shape and a driving unit 55 that rotates the arms 51 and 52 in synchronization in the clockwise direction and the counter-clockwise direction (i.e., in forward and reverse) by 90°. Vacuum chucking units (suction units) 29 are provided at the front ends of such arms 51 and 52 so that it is possible to vacuum chuck and convey the separators 115.

When the first arm 51 and the second arm 52 of the fourth conveying apparatus 50 rotate in forward and reverse, the front ends thereof where the vacuum chucking units 29 are provided rotate so as to alternately overlap the cell stacking unit (stacking region) 15 that has arrived at the fourth work position P4 that is a position (stacking position) where the separators 115 are laminated. Accordingly, the fourth conveying apparatus 50 is capable of conveying separators 115, which have been supplied by two separator delivery systems 160 to the first preparation unit 131 and the second preparation unit 132 at positions rotated by 90°, in single cycle units to the cell stacking unit 15 that has arrived at the fourth work position P4.

The control unit 200 carries out control, including the turntable 11, the conveying apparatuses 20, 30, 40, and 50, and the unloading unit 60. The control unit 200 includes a function 210 that controls the turntable 11, a function 220 that controls a system of the first conveying apparatus 20, a function 230 that controls a system of the second conveying apparatus 30, a function 240 that controls a system of the third conveying apparatus 40, a function 250 that controls a system of the fourth conveying apparatus 50, and a function 260 that controls a system of the unloading unit 60. The function 210 that controls the turntable 11 includes a function that carries out control to drive the turntable 11 using an actuator 12 in single units with a pitch of 72° so that the five cell stacking units 15 reach the respective work positions P1, P2, P3, P4, and P5 in order.

The function (functional unit) 220 that controls the system of the first conveying apparatus 20 includes a function (first function) 221 that conveys a positive electrode sheet 111 as a target object from the first preparation unit 121 to the first work position P1 using the first arm 21 and at the same time conveys a positive electrode sheet 111 from the supplying unit (supplying table) 151 to the first preparation unit 121 using the third arm 23 when rotating in the clockwise direction in the drawings (forward rotation, the first direction). The first function 221 includes a function that carries out a process (preprocessing) that aligns a positive electrode sheet 111 at the second preparation unit 122 while the arms 21 to 24 are rotating forwards.

The function unit 220 also includes a second function 222 that conveys a positive electrode sheet 111 from the second preparation unit 122 to the first work position P1 using the second arm 22 and at the same time conveys the positive electrode sheet (target object) 111 from the supplying unit 151 to the second preparation unit 122 using the fourth arm 24 when rotating in the counter-clockwise direction in the drawings (reverse rotation, the second direction), and carries out a process (preprocessing) that aligns a positive electrode sheet 111 at the first preparation unit 121. Using the first function 221 and the second function 222, it is possible to hide the cycles required for the preprocessing (alignment) at the first and second preparation units 121 and 122 in the cycles in which positive electrode sheets 111 are conveyed from the supplying table 151 to the work position P1 and to supply the preprocessed target objects in cycle units to the cell stacking units.

The function 220 that controls the system of the first conveying apparatus 20 further includes a third function 223 that rotates the arms 21 to 24 in forward and reverse in cycle units in synchronization using the driving unit 25 and, in synchronization with such operation, carries out control to convey positive electrode sheets 111 to the supplying table 151 in synchronization with such movement using the delivery system 150.

The function (functional unit) 230 that controls the system of the second conveying apparatus 30 includes a function 231 that conveys a separator 115 from the first separator supplying table 131 to the second work position P2 using the first arm 31 when rotating in the clockwise direction (forward rotation, the first direction), a function 232 that conveys a separator 115 from the second separator supplying table 132 to the second work position P2 using the second arm 32 when rotating in the counter-clockwise direction (reverse rotation, the second direction), and a function 233 that carries out control that rotates the arms 31 and 32 in forward and reverse in cycle units in synchronization using the driving unit 35 and conveys separators 115 to the supplying tables 131 and 132 in synchronization with such movement using the respective delivery systems 160.

The function (functional unit) 240 that controls the system of the third conveying apparatus 40, in the same way as the function 220 that controls the system of the first conveying apparatus 20, includes: a first function 241 that conveys a negative electrode sheet 112 from the first preparation unit 141 to the third work position P3 using the first arm 41 and at the same time conveys a negative electrode sheet 112 from the supplying unit 171 to the first preparation unit 141 using the third arm 43 when rotating in the clockwise direction in the drawings, and while doing so, carries out processing (preprocessing) that aligns the negative electrode sheet 112 at the second preparation unit 142; and a second function 242 that conveys a negative electrode sheet 112 from the second preparation unit 142 to the third work position P3 using the second arm 42 and at the same time conveys a negative electrode sheet 112 from the supplying unit 171 to the second preparation unit 142 using the fourth arm 44 when rotating in reverse, and also carries out alignment (preprocessing) of the negative electrode sheet 112 at the first preparation unit 141. The function 240 also includes a third function 243 that rotates the arms 41 to 44 in forward and reverse in cycle units in synchronization using the driving unit 45 and, in synchronization with such operation, carries out control that conveys the negative electrode sheets 112 to the supplying table 171 using the delivery system 170.

The function (functional unit) 250 that controls the system of the fourth conveying apparatus 50, in the same way as the function 230 that controls the second conveying apparatus 30, includes a function 251 that conveys a separator 115 from the first separator supplying table 131 to the fourth work position P4 using the first arm 51 when rotating in the forward direction, a function 252 that conveys a separator 115 from the second separator supplying table 132 to the fourth work position P4 using the second arm 52 when rotating in the counter-clockwise direction, and a function 253 that carries out control that rotates the arms 51 and 52 in forward and reverse in cycle units in synchronization using the driving unit 55 and conveys the separators 115 to the supplying tables 131 and 132 in synchronization with such movement using the respective delivery systems 160.

The function 260 that controls the system of the unloading unit 60 includes a function which drives the unloading unit 60, when the turntable 11 has been rotated a predetermined number of times in the counter-clockwise direction so that a positive electrode sheet 111, a separator 115, a negative electrode sheet 112, and a separator 115 have been laminated at a cell stacking unit 15 for a predetermined number of layers by the conveying apparatuses 20 to 50, to discharge the cell 100 that has been laminated from the fifth work position P5 of the turntable 11 to the conveying table 80. Accordingly, the unloading unit 60 is not necessarily driven in cycle units.

FIG. 2 shows the conveying state of the respective conveying apparatuses 20, 30, 40, and 50 of the stacking system 1 by way of dot-dash lines C1 and dot-dot-dash lines C2. The dot-dash lines C1 and the dot-dot-dash lines C2 may be interchanged for each of the conveying apparatuses.

The method of stacking (manufacturing) an electrode structure (electrode assembly) using the stacking system 1 includes a step C0 that rotates the turntable 11 to move the respective cell stacking units 15 in order from the first work position P1 to the fifth work position P5, and steps C1 and C2 where, in synchronization with the step C0, the first type of conveying apparatuses 20 and 40 and the second type of conveying apparatuses 40 and 40 that are alternately disposed simultaneously place the electrodes 111, 112 and the separators 115, which have been picked up from different preparation units in each cycle out of the first preparation unit and the second preparation unit, on the cell stacking units 15 that have arrived at the respective stacking positions P1 to P4.

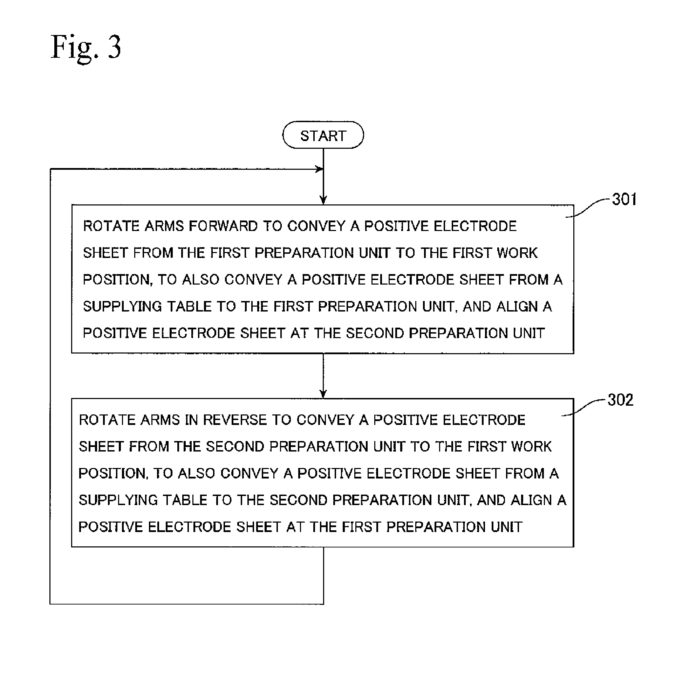

FIG. 3 shows a method (operation) of controlling the first conveying apparatus 20. In step 301, the arms 21 to 24 are rotated forward (by 90°), a positive electrode sheet 111 is picked up from the first preparation unit 121 and conveyed to and stacked at the cell stacking unit 15 that has arrived at the first work position P1, and at the same time a positive electrode sheet 111 is picked up from the supplying table 151 and conveyed to the first preparation unit 121. In addition, at the second preparation unit 122, alignment is carried out for a conveyed positive electrode sheet 111.

In step 302, the arms 21 to 24 are rotated in reverse (by 90°), a positive electrode sheet 111 is picked up from the second preparation unit 122 and conveyed to and stacked at the cell stacking unit 15 that has arrived at the first work position P1, and at the same time a positive electrode sheet 111 is picked up from the supplying table 151 and conveyed to the second preparation unit 122. In addition, at the first preparation unit 121, alignment is carried out for a conveyed positive electrode sheet 111.

In the procedure that laminates the cell 100, the first conveying apparatus 20 repeats the steps 301 and 302 described above in cycle units (units of 90° rotation). By using this control method, the processing time for aligning the positive electrode sheets 111 at the first and second preparation units 121 and 122 is hidden, and it is effectively possible to convey a positive electrode sheet 111 in cycle units from the supplying table 151 to the first work position P1, that is, for every forward rotation and reverse rotation. Accordingly, it is possible to place an aligned positive electrode sheet 111 on a cell stacking unit 15 and to manufacture a highly precise cell 100 at high speed. This is also the same for the second conveying apparatus 30, the third conveying apparatus 40, and the fourth conveying apparatus 50.

Note that although an example where an electrode structure (cell) 100 for a lithium ion cell is manufactured by the stacking apparatus 1 has been described above, the stacking apparatus 1 is not limited to lithium ion cells and is favorable for manufacturing any cell including a laminated type electrode structure.

## Claims

1. A stacking system comprising:
a first turntable that is equipped with a plurality of stacking regions and rotationally moves the plurality of stacking regions to a plurality of work positions in order; and
a plurality of conveying apparatuses that stack, at stacking positions included in the plurality of work positions, target objects on the plurality of stacking regions of the first turntable that have arrived at the stacking positions,
wherein each conveying apparatus out of the plurality of conveying apparatuses includes:
a first arm that rotates between a stacking position and a first preparation unit that prepares a target object to be stacked at the stacking position, picks up the target object from the first preparation unit, and stacks the target object at the stacking position; and
a second arm that rotates together with the first arm between the stacking position and a second preparation unit, picks up a same target object as the first preparation unit that has been prepared at the second preparation unit, and stacks the same target object at the first position.

2. The stacking system according to claim 1,
wherein the plurality of conveying apparatuses include a first type of conveying apparatus that stacks an electrode sheet, which is one of a positive electrode and a negative electrode, as the target object, and
the first type of conveying apparatus further include:
a third arm that rotates together with the first arm between a supplying unit for the electrode sheet and the first preparation unit; and
a fourth arm that rotates together with the third arm between the second preparation unit and the supplying unit, and
the first preparation unit and the second preparation unit respectively include an alignment unit for the electrode sheets.

3. The stacking system according to claim 1 or 2,
wherein the plurality of conveying apparatus include a second type of conveying apparatus that stacks a separator as the target object,
and the first preparation unit and the second preparation unit both include a cutting unit for the separator.

4. The stacking system according to any of claim 1 to 3,
wherein the first turntable moves to five work positions that include four stacking positions and one unloading position.

5. A conveying apparatus that conveys a first target object to a first work position comprising:
a first arm that rotates between a first preparation unit that prepares the first target object and the first work position;
a second arm that rotates together with the first arm between the first work position and a second preparation unit;
a third arm that rotates together with the first arm between a supplying unit of the first target object and the first preparation unit;
a fourth arm that rotates together with the third arm between the second preparation unit and the supplying unit;
a driving unit that drives the first arm, the second arm, the third arm, and the fourth arm alternately in a first direction and a second direction;
a function that conveys, during rotation in the first direction, a first target object from the first preparation unit to the first work position using the first arm, at the same time conveys a first target object from the supplying unit to the first preparation unit using the third arm, and carries out preprocessing at the second preparation unit; and
a function that conveys, during rotation in the second direction, a first target object from the second preparation unit to the first work position using the second arm, at the same time conveys a first target object from the supplying unit to the second preparation unit using the fourth arm, and carries out preprocessing at the first preparation unit.

6. A method including stacking a plurality of electrode sheets with separators in between using a stacking system,
wherein the stacking system includes:
a first turntable that is equipped with a plurality of stacking regions and rotationally moves the plurality of stacking regions to a plurality of work positions in order; and
a plurality of conveying apparatuses that stack, at stacking positions included in the plurality of work positions, target objects at the plurality of stacking regions of the first turntable that have arrived at the stacking positions,
wherein each conveying apparatus out of the plurality of conveying apparatuses includes:
a first arm that rotates between a stacking position and a first preparation unit that prepares a target object to be stacked at the stacking position, picks up the target object from the first preparation unit, and stacks the target object at the stacking position; and
a second arm that rotates together with the first arm between the stacking position and a second preparation unit, picks up a same target object as the first preparation unit that has been prepared at the second preparation unit, and stacks the same target object at the first position,
the plurality of conveying apparatuses include a first type of conveying apparatus that stacks an electrode sheet, which is one of a positive electrode and a negative electrode, and a second type of conveying apparatus that stacks a separator, and
the stacking includes:
rotating the first turntable to move to five work positions including four stacking positions in order, where the first type of conveying apparatus and the second type of conveying apparatus are alternately disposed, and one unloading position; and
each of the first type of conveying apparatuses and the second type of conveying apparatuses that are alternately disposed simultaneously stacking electrode sheets and separators, which have been picked up from different preparation units in each cycle out of the first preparation unit and the second preparation unit, on the stacking regions that have arrived at the respective stacking positions.

7. A control method of a conveying apparatus,
wherein the conveying apparatus includes a first arm that rotates between a first preparation unit that prepares a target object and a first work position, a second arm that rotates together with the first arm between the first work position and a second preparation unit, a third arm that rotates together with the first arm between a supplying unit of the target object and the first preparation unit, and a fourth arm that rotates together with the third arm between the second preparation unit and a supplying unit, and
the control method comprising:
moving the first arm, the second arm, the third arm, and the fourth arm in a first direction to convey a target object from the first preparation unit to the first work position using the first arm and at the same time to convey a target object from the supplying unit to the first preparation unit using the third arm, and also carrying out preprocessing at the second preparation unit; and
moving the first arm, the second arm, the third arm, and the fourth arm in a second direction to convey a target object from the second preparation unit to the first work position using the second arm and at the same time to convey a target object from the supplying unit to the second preparation unit using the fourth arm, and also carrying out preprocessing at the first preparation unit.
